# EUROPÄISCHE PATENTSCHRIFT

(11) **EP 1 371 537 B1**
(45) Veröffentlichungstag und Bekanntmachung des Hinweises auf die Patenterteilung: **26.01.2005**
(21) Anmeldenummer: 03011998.6
(22) Anmeldetag: 28.05.2003
(51) Int. Cl.: B60T 13/74, B60T 7/10

(54) **Betätigungsvorrichtung mit Aktuator**
Operating device with actuator
Dispositif de commande avec actionneur

(30) Priorität: 10.06.2002 DE 10225491
(43) Veröffentlichungstag der Anmeldung: 17.12.2003
(73) Patentinhaber: CNH Österreich GmbH, 4300 St. Valentin (AT)
(72) Erfinder: Hrazdera, Oliver, Dipl.-Ing., 4501 Neuhofen an der Krems (AT)
(74) Vertreter: Feldkamp, Rainer, Dipl.-Ing.

(56) Entgegenhaltungen:
- EP-A- 0 353 876
- WO-A-00/17023
- DE-A- 4 129 934
- DE-U- 29 909 613
- FR-A- 2 808 486
- US-A- 5 178 237

## Beschreibung

Die Erfindung betrifft eine Betätigungsvorrichtung mit Aktuator, insbesondere für die Bedienung von Fahrzeugen oder mit diesen verbundenen peripheren Vorrichtungen.

Als Beispiele für Bedienvorgänge sind in erster Linie die Betätigung der Bremse mittels eines Fußpedals, die Betätigung der Handbremse über einen Handbremshebel oder auch die Betätigung einer Parksperre, der Kupplung oder des Ganghebels zu nennen.
Dabei ergeben sich Probleme bei der mechanischen Übertragung der Stellbewegungen, sofern die Entfernung zwischen dem Bedienelement, also dem Hebel, dem Pedal oder dem Griff, und dem Stellglied zu groß wird.
Mechanische Systeme der Signalübertragung haben bekanntlich mit zunehmender Entfernung Toleranzprobleme, beispielsweise durch Wärmeausdehnung der Komponenten, mechanischen Verschleiß an den Umlenk- oder Kopplungspunkten des Übertragungssystems oder Ähnlichem.
Ein weiteres Problem tritt hinzu, wenn die Fahrzeugkabinen der Fahrzeuge, etwa bei geländegängigen Fahrzeugen, sehr gut gefedert sein müssen und sich die Lage von Fahrzeugkabine und Fahrgestell mit Motor und Getriebe zueinander häufiger und stärker ändert. Besonders bei aktiven und passiven Fahrzeugkabinenfederungen kommt es zu größeren Bewegungen zwischen Fahrzeugkabine und Fahrgestell.
Sofern der Signalübertragungsweg zwischen dem Bedienelement und dem Stellglied von den Relativbewegungen zwischen Fahrzeugkabine und Fahrgestell betroffen ist, ergeben sich zusätzliche Probleme durch die Veränderungen des Signalweges aufgrund der Kabinenfederung des Fahrzeuges bei mechanischen Mitteln der Signalübertragung zwischen dem Bedienelement und dem entsprechenden Stellglied.
Als weiteres Problem des Fahrzeugbaus ist die zunehmende Verschlechterung der Platzverhältnisse zu nennen, welche verschiedene Ursachen hat. Insbesondere steigt die Anzahl der Komponenten und Bedienelemente in der Fahrzeugkabine stetig und die ergonomische Anordnung derselben stellt immer größere Schwierigkeiten dar. Somit ist der Ersatz von großbauenden Hebeln durch Bedienelemente mit geringerem Platzbedarf wünschenswert.
Im Stand der Technik sind verschiedene Realisierungen der Übertragung von translatorischen Bewegungen bekannt. Eine Reihe von Bedienvorgängen von Fahrzeugen werden durch Hebel bzw. Hebelsysteme vorgenommen. Dabei wird die translatorische Bewegung mittels Seilzügen, Bowdenzügen oder Gestängen mechanisch übertragen.
Beispielhaft für derartige Bewegungsübertragungen ist eine Erfindung, die in der WO 00/17023 offenbart ist. Gegenstand dieser Erfindung ist eine elektrisch steuerbare Feststellbremse für ein Fahrzeug, aufweisend eine Bremseinheit, welche mit den Fahrzeugrädern und einem Aktuator gekoppelt ist, wobei der Aktuator aus einem Feststellelement und einem manuell bedienbaren Element zum Bedienen der Bremse aufgebaut ist, und die besagten Bremseinheit und Aktuatoreinheit gemeinsam mittels eines beweglichen Verbindungselements miteinander verbunden sind. Die Erfindung ist dadurch gekennzeichnet, dass das Feststellelement und das Element zum Bedienen der Bremse mechanisch durch das Verbindungselement derart miteinander parallel gekoppelt sind, dass beide Elemente unabhängig voneinander bedient werden können.
Bremsanlagen mit einer Doppelfunktionalität sind des Weiteren in der DE 4129934 A1 und der DE 299 09 613 U1 beschrieben.
Alternativ zu den genannten Möglichkeiten ist die Übertragung einer translatorischen Bewegung mittels eines Hydrauliksystems durch einen Hydraulikkolben, welcher sich entlang eines Hydraulikzylinders bewegt, möglich.

Obgleich Hydraulikleitungen an Stelle von Seilzügen, Bowdenzügen oder Gestängen flexibler ausgeführt und verlegt werden können und mit hoher Präzision arbeiten, besteht das Problem der Störanfälligkeit durch Undichtigkeit und das erhöhte Sicherheitsrisiko bei unter hohem Druck stehenden Hydrauliksystemen. Auch ist der Platzbedarf für die Hydraulikleitungen und Komponenten sehr hoch.
Außerdem ist ein Hydrauliksystem relativ kostenaufwändig und deshalb nur dann einzusetzen, wenn diese Investition unbedingt erforderlich ist.

Die Aufgabe der Erfindung besteht nunmehr darin, eine Betätigungsvorrichtung für die Bedienung von Fahrzeugen zu entwickeln, die eine hohe Toleranz gegenüber den Relativbewegungen und sich veränderndem Abstand zwischen dem Bedienelement und dem Wirkelement bzw. dem Stellglied besitzt, wobei die Bedienung auch in Notfällen bei Ausfall der Betätigungsvorrichtung gewährleistet sein muss.

Erfindungsgemäß wird die Aufgabe durch eine Betätigungsvorrichtung mit Aktuator gelöst, welche insbesondere für die Bedienung von Fahrzeugen oder mit diesen verbundenen peripheren Vorrichtungen geeignet ist. Die Betätigungsvorrichtung mit Aktuator besteht erfindungsgemäß aus einem Bedienelement, einer Steuereinheit, einem Aktuator, einem mit dem Aktuator und einem manuell bedienbaren Element gekoppelten Steller sowie einem Mittel zur Positionsbestimmung des Stellers. Diese wirken derart zusammen, dass ein elektrisches Signal des Bedienelements in der Steuereinheit mit mindestens einem Signal zur Positionsbestimmung des Stellers zu einem elektrischen Ausgangssignal verarbeitet wird und dass der Aktuator in Abhängigkeit des Ausgangssignals eine translatorische Stellbewegung ausführen. Der Aktuator ist erfindungsgemäß als Linearspindelmotor ausgebildet, wobei der Linearspindelmotor und der Steller gemeinsam auf einem beweglichen Schlitten angeordnet und mit dem Stellglied verbunden sind und dass der bewegliche Schlitten von einem Rahmen translatorisch geführt wird, wobei über eine Kurbel für den Handbetrieb mit zugehöriger Bewegungsumformung der bewegliche Schlitten translatorisch bewegt wird und somit der Linearspindelmotor und der Steller gemeinsam, also ohne Relativbewegung zueinander, bewegt werden und die Stellbewegung ausführen. Der elektrische Aktuator ist darüber hinaus selbst verriegelnd, das heißt, dass die Position des Stellers bei Einwirkung von außen durch Druck oder Zug nicht veränderbar ist.
Die mechanische Bewegung stellt im Sinne der Erfindung im Wesentlichen eine translatorische Bewegung dar, welche aber wiederum beispielsweise über einen geeigneten Umformer in eine Rotationsbewegung umgewandelt werden kann.

Die Komponente "Steuereinheit" weist dabei auch Merkmale einer Regeleinrichtung auf, indem das Signal zur Positionsbestimmung des Stellers, in der Steuereinheit, auch Controller genannt, mit dem Signal des Bedienelementes in der Art eines Regelkreises verarbeitet wird.
Der Begriff "Steuereinheit" bezieht sich nachfolgend auf die Steuerung der fahrzeugspezifischen Steuergrößen, wie Geschwindigkeit, Bremskraft oder Motordrehzahl, im engeren Sinne ist die Steuereinheit aber eine Regeleinheit, welche den Aktuator durch die Rückkopplung der Positionsmeldung regelt. Nach der Konzeption der Erfindung wird dabei die mechanische Ansteuerung von Stellern oder Stellgliedern durch eine elektrische Ansteuerung ersetzt, wodurch eine Signalübertragung ohne mechanische Elemente möglich wird und damit die Nachteile der mechanischen Signalübertragung überwunden werden.
Die erfindungsgemäße Betätigungsvorrichtung eignet sich zur Ansteuerung des Motorstaubremssignals, des Kupplungspedals eines Ganghebels, PTO (Zapfwellen) -Gänge oder auch einer Bremse, wie Parksperre oder Handbremse.
Vorteithaft bei der erfindungsgemäßen Lösung ist, dass die vom Bedienelement ausgelöste Reaktion des Stellers in der Art eines Regelkreises von der/dem Steuereinheit/Controller verarbeitet und auf eine korrekte Ausführung hin diagnostiziert wird. Auch ist wichtig, dass eine Notansteuerung bei einem Ausfall der Betätigungsvorrichtung durch Stromausfall, Kurzschluss oder elektrische Signalunterbrechung möglich ist und das Fahrzeug einen sicheren Zustand erreicht.
Als Vorteile der erfindungsgemäßen Lösung ist insbesondere hervorzuheben, dass durch die elektrischen Leitungen und deren Flexibilität eine beinahe uneingeschränkte Bewegungsfreiheit zwischen der Fahrzeugkabine und dem Fahrgestell mit den betreffenden anzusteuernden Komponenten erreicht wird. Der elektrische Signalfluss zeichnet sich weiterhin vorteilhaft dadurch aus, dass er vollständig diagnostizierbar ist und somit eine automatische Ansteuerung ermöglicht und für zusätzliche Sicherheit sorgt. Nicht unerheblich ist gleichfalls, dass für den Bediener ein erheblicher Komfortgewinn eintritt, weil weniger großbauende Hebel im Fahrzeug angeordnet sind und mit geringeren Bedienbewegungen der gleiche Bedieneffekt bzw. die gleiche Bedienfunktion erreicht werden kann. Dies hat auch zur Folge, dass das Platzangebot für die Fahrzeuginsassen bzw. den Fahrzeugbediener steigt und weitere, bisher noch nicht übliche Gestaltungs- und Designvariationen möglich werden.
Ebenso vorteilhaft ist die Vernetzbarkeit der einzelnen Funktionen des Fahrzeuges. Als Beispiel sei hier das automatische Einlegen der Parksperre bei Zündung aus dem Stillstand des Fahrzeuges genannt.
Eine vorteilhafte Besonderheit des erfindungsgemäßen Bedienelementes ist, dass die Bedienbewegungen ein proportionales Verhalten aufweisen und sehr gut dosierbar sind. Auch ist es ohne weiteres möglich, das Steuerverhalten durch die Steuerparameter zu verändern und beispielsweise für bestimmte Funktionen andere als proportionale Steuerzusammenhänge zu ermöglichen. Ebenso vorteilhaft im Vergleich zu hydraulischen Aktuatoren ist den elektrischen Aktuatoren zueigen, dass keine Leckagen auftreten können und auch keine hohen Drücke und damit verbundene Gefahren von dem elektrischen Aktuator ausgehen. Insgesamt zeichnet sich die vorgeschlagene Lösung somit durch eine einfache und Platz sparende Realisierung einer Betätigungsvorrichtung für die Bedienung von Fahrzeugen aus.

Weitere Ausgestaltungen der Erfindung werden anhand von Zeichnungen nachfolgend dargestellt. Es zeigen:

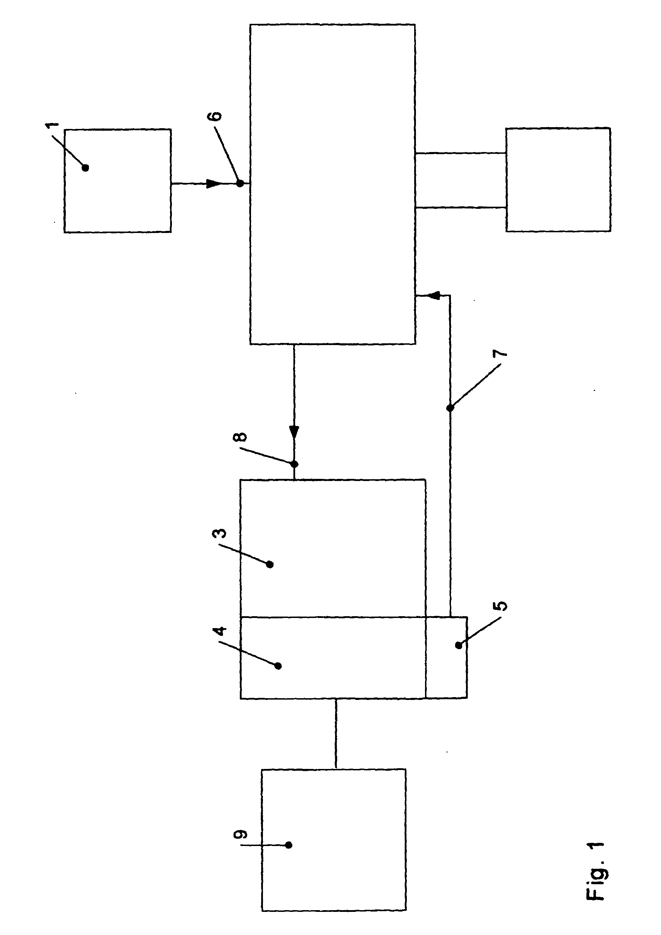

- Fig. 1:: Signalflussdiagramm der erfindungsgemäßen Betätigungsvorrichtung mit Aktuator,
- Fig. 2:: Ausgestaltung einer Notbetriebsvorrichtung mittels Flügelrad,
- Fig. 3:: Ausgestaltung der Notbetriebsvorrichtung durch Bewegung der Aktuator-Steller-Einheit mittels Rahmen und beweglichem Schlitten,
- Fig. 4:: Ausgestaltung einer Notbetriebsvorrichtung mittels durchgehender Stellerspindel und Kurbel.
Das Prinzip der erfindungsgemäßen Lösung wird nachfolgend durch Fig. 1 erläutert.
Dabei wird im Bedienelement 1 in der Art eines Steuerknüppels bzw. Joysticks ein elektrisches Signal 6 erzeugt. In der Steuereinheit 2 wird das elektrische Signal des Bedienelementes 1 mit mindestens einem Signal zur Positionsbestimmung 7 des Stellers 4 verarbeitet zu einem elektrischen Ausgangssignal 8 der Steuereinheit 2, welches über elektrische Leitungen an den Aktuator 3 übertragen wird. Der Aktuator 3 führt dann in Abhängigkeit des Ausgangssignals 8 mit dem Steller 4 eine translatorische Stellbewegung aus, welche beim Stellglied 9, beispielsweise einer Handbremse, zur Bremsreaktion führt.
Nach der Erfindung ist der elektrische Aktuator 3 als Linearspindelmotor ausgeführt. Im Linearspindelmotor 3 ist direkt der Steller 4 enthalten bzw. stellt die Spindel des Linearspindelmotors 3 den Steller 4 selbst dar.
Die Betätigungsvorrichtung ist erfindungsgemäß so ausgebildet, dass entlang der Spindel des Linearspindelmotors 3 bzw. des Stellers 4 in Richtung der Stellbewegung eine mechanische Verstellvorrichtung in Form eines Gestänges, eines Seilzuges oder einer Gewindeinnenbohrung 14 mit Stellschraube vorgesehen ist, welche im Notbetrieb von Hand verstellt werden kann. Dabei ist erfindungswesentlich, dass die Stellbewegung im Notbetrieb ausgeführt werden kann, ohne die Spindel des Linearspindelmotors 3 zu verstellen. Weiterhin befinden sich nach einer bevorzugten Ausführungsform der Erfindung als Mittel zur Positionsbestimmung 5 des Stellers 4 ein Schieberpotentiometer, mit welchem eine Positionsrückmeldung des Stellers 4 an die Steuereinheit 2 erfolgt. Alternativ dazu kann die Position auch in digitaler Form, z.B. durch codierte optische Systeme, erfasst werden.
Nach einer weiteren Ausgestaltung der Erfindung wird das Bedienelement 1 als Schalter ausgeführt, welcher zum Ein- und Ausschalten der Parksperre vorgesehen ist. Der Informationsgehalt der Signale in den einzelnen Schalterstellungen entsprechen dann in ähnliche Weise der Stellung eines Joysticks 1. Erfindungsgemäß wird eine Brückenschaltung vorgesehen, die durch Pulsung oder Analogspannungsveränderung steuerbar ist. Die Umpolung der Brückenschaltung führt zur Änderung der Bewegungsrichtung des Aktuators bzw. des Linearspindelmotors 3, welches dann die Umkehrung der Bewegungsrichtung des Stellers 4 zur Folge hat.
Weiterhin ist die Brückenschaltung derart ausgebildet, dass die Stellgeschwindigkeit des Stellers 4, wiederum durch die Stellgeschwindigkeit des Linearspindelmotors bzw. elektrischen Aktuators 3 bedingt, durch die Pulsung der Brückenschaltung steuerbar ist.
Als Steuereinheit 2 wird vorteilhaft ein Mikrocomputer eingesetzt, der weiterhin die Signale der Systemdiagnose über die Stromaufnahme, Kurzschluss und von Signalunterbrechungen verarbeitet und bei der Ausgabe des Steuersignals 8 an den Aktuator 3 berücksichtigt .

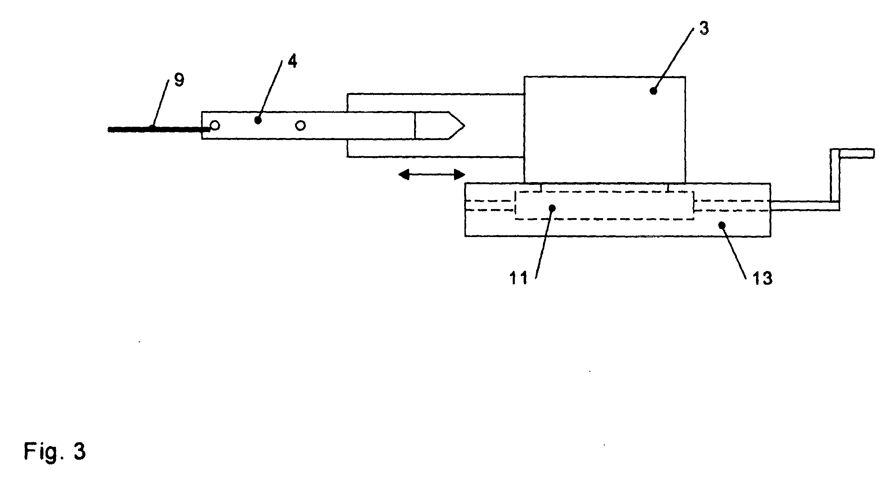

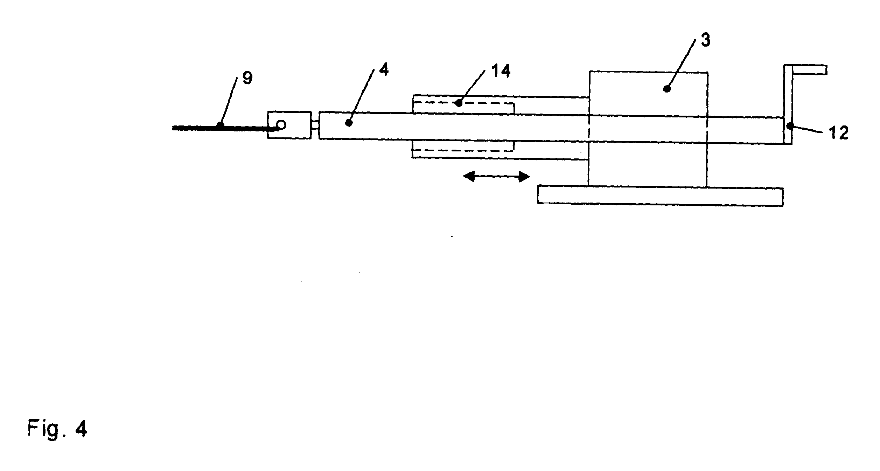

Vorteilhaft wird das Bedienelement 1 als Steuerknüppel bzw. Joystick ausgebildet.
Weiterhin ist die Steuereinheit 2 über CAN oder TTP an das Bussystem der Fahrzeugregelung bzw. -steuerung angeschlossen.
Der Vollständigkeit halber sei erwähnt, dass das elektrische System über eine Batterie oder über das elektrische System bzw. das elektrische Versorgungsnetzwerk des Fahrzeuges mit Elektroenergie versorgt wird und darüber hinaus selbstverständlich an- und abschaltbar ist.
Die Stellbewegung des Aktuator 3 bzw. des Stellers 4 ist in Bezug auf die Auslenkung des Steuerknüppels in der Steuereinheit 2 frei programmierbar. Besonders vorteilhaft ist eine proportionale Stellbewegung des Aktuators 3 zur Auslenkung des Steuerknüppels 1 vorgegeben.
Der als Linearspindelmotor 3 vorteilhaft ausgeführte elektrische Aktuator ist prinzipiell in einer Vielzahl unterschiedlicher Ausfiihrungsformen bekannt. Diese unterscheiden sich durch Größe, Zug- und Druckkraft, Geschwindigkeit, Temperatur, Dichtheit (Ipxx) und Betätigungsweg.
Erfindungsgemäß wird ein solcher Linearspindelmotor 3 mit einer Positionsrückmeldung, zum Beispiel durch ein integriertes Schieberpotentiometer, ergänzt, wobei das Schieberpotentiometer vom ansteuernden Kontroller bzw. der Steuereinheit rückgelesen wird.
Für die Sicherung und die Qualität der Funktion des Gesamtsystems ist es wichtig, Diagnosemöglichkeiten vorzusehen. Dies ist bei elektrischen Aktuatoren 3 vorteilhaft auf einfache Weise erreichbar, indem durch die Positionsmeldung Informationen über das Erreichen oder Nichterreichen einer bestimmten Stellung und der damit verbundenen Einwirkung auf das Stellglied 9 bzw. den Steller 4 überprüft werden kann. Ebenso ist es problemlos möglich, Fehler im Motor zu identifizieren, beispielsweise indem die Stromaufnahme überwacht wird, wenn der Motor nicht reagiert.
Gleiches gilt für Kurzschlüsse und Signalunterbrechungen, deren Informationen auf einfache Weise in das Diagnosesystem implementiert werden können. Damit kann ein sehr gutes Onboard-Diagnosesystem aufgebaut werden, das sicherstellt, dass auch sicherheitskritische Funktionen realisiert werden.
Es ist weiterhin von großem sicherheitstechnischem Interesse, dass im Notfall ein ganz bestimmter Zustand des Fahrzeuges, ein sogenannter "sicherer Modus", automatisch erreicht wird. Darunter ist zu verstehen, dass beispielsweise die Parksperre bei Motorausfall und Fahrzeugstillstand automatisch eingelegt wird.
Erfindungsgemäß wurde beschrieben, dass durch einen zusätzlichen mechanischen Verstellweg die Möglichkeit geschaffen wird, auf das Stellglied 9 einzuwirken, ohne dass der Linearspindelmotor 3 verstellt wird.
Besonders vorteilhaft lässt sich dies durch ein am Verstellteil des Motors angebrachtes Teil mit einer Gewindeinnenbohrung 14 realisieren, in die eine Art Schraube eingreift. Die Schraube kann mit der Hand verstellt werden, so dass das zu betätigende Element, beispielsweise eine Bremse 9, angezogen bzw. geöffnet werden kann, ohne die Spindel des Motors dabei zu verstellen.
Eine weitere nicht erfindungsgemäße Ausführungsform ist die Anwendung der Betätigungsvorrichtung als Handbremse. Der Linearspindelmotor 3 ist dabei mit einer Gewindeinnenbohrung 14 versehen, in welcher eine von Hand zu betätigende oder gesicherte Schraube mit einem daran angeschlossenen Seilzug oder der Bremse verbunden ist. Der Linearspindelmotor 3 wird über die Brückenschaltung von der Steuereinheit 2 angesteuert, die aktuelle Position des Motors wird durch die Positionsrückmeldung erfasst und in der Steuereinheit 2 verarbeitet. Über die Hebelstellung des vom Fahrer zu bedienenden Joysticks 1 wird die Bremse 9 letztlich fest gestellt.

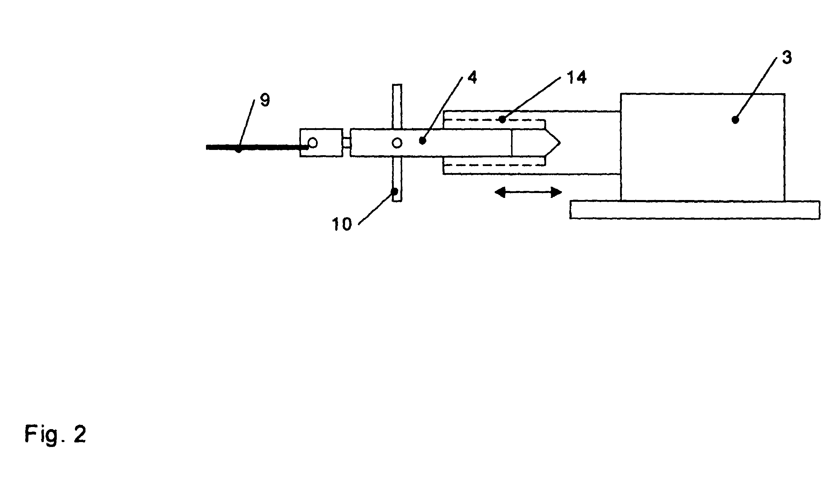

In Fig. 2 ist eine erfindungsgemäßen Ausgestaltung der Notbetriebsvorrichtung bzw. der Notbetriebsansteuerung dargestellt. Dabei wird der Linearmotor 3 und seine Spindel über eine Gewindeinnenbohrung 14 und das dazu komplementäre Außengewinde des Stellers 4 über diesen mit dem Stellglied 9 verbunden. Über ein Flügelrad 10 lässt sich der Steller 4 drehend, von der Gewindeinnenbohrung 14 geführt, translatorisch verstellen, ohne den Linearspindelmotor 3 oder dessen Spindel zu bewegen.
Gemäß Fig. 3 wird eine Ausgestaltung der Erfindung gezeigt, welche eine Verstellung im Notbetrieb des Stellers 4 über die Verstellbewegung des kompletten Aktuators 3 mit Steller 4 realisiert. Dazu ist auf einem Rahmen 13 ein beweglicher Schlitten 11 angeordnet, mit welchem der Linearspindelmotor 3 und der Steller 4 sowie das Stellglied 9 verbunden ist. Wird über die Kurbel 12 der bewegliche Schlitten 11 translatorisch entlang der Pfeilrichtung bewegt, so bewegt sich der Linearmotor 3, seine Spindel sowie der Steller 4 gemeinsam.
Erfindungsgemäß wird hierbei keine Relativbewegung des Linearmotors 3 zu seiner Motorspindel erzeugt. Die für die Stellbewegung im Stellglied 9 erforderliche translatorische Bewegung wird allein durch die komplette Bewegung der gesamten Baueinheit des Aktuators 3 mit Steller 4 erreicht.
Eine weitere nicht erfindungsgemäße Ausgestaltung wird in Fig. 4 dargestellt. Dabei wird wiederum, ausgehend von einer Gewindeinnenbohrung 14, über den der Steller 4 mit dem Linearspindelmotor 3 verbunden ist, eine unabhängige Bewegung des Stellers 4 über die Kurbel 12 ermöglicht, ohne die Spindel des Linearmotors 3 relativ zu diesem zu verstellen. Der Steller 4 geht dabei durch den Linearmotor 3 hindurch und ermöglicht baulich den Einsatz einer Kurbel 12 zum Notbetrieb.
Die angeführten Ausgestaltungen der Notbetriebsansteuerung von Hand sind ohne Hilfsenergie betätigbar und ermöglichen die Stellbewegung des Stellers 4 und die Einwirkung auf das Stellglied 9, auch im Falle des Ausfalls des als Linearspindelmotor ausgebildeten Aktuators 3. Somit wird es möglich, wichtige Bedienfunktionen, wie das Anziehen der Handbremse oder Einlegen der Parksperre, und das damit verbundene Erreichen eines sicheren Zustandes, auch ohne elektrische Energie zu erreichen.
Das elektronische System selbst verfügt über einen Busanschluss (CAN oder TTP), und es werden eventuell auftretende Fehler gespeichert und an die anderen Busteilnehmer und Komponenten des Steuer- und Regelsystems des Fahrzeuges, wie zum Beispiel Displaylampen und Getriebe, weitergegeben. Betätigt nun der Fahrer den Joystick 1, so wird die Elektronik den Linearspindelmotor 3 und damit die Bremse 9 so weit verstellen, dass die Anziehkraft der Bremse linear mit der Auslenkung des Joysticks 1 übereinstimmt. Dabei wird überprüft, ob der Motor entsprechend ausstellt, was über die Rückmeldung des Potentiometerschleifers des Linearspindelmotors 3 erfolgt. Entspricht die Ausstellung nicht dem gewünschten Eingangssignal, so wird die Diagnose vorgenommen.
Vorteilhaft ist auch die automatische Auslösung der Diagnose möglich, zum Beispiel, wenn die Zündung des Fahrzeuges deaktiviert wird. Damit lässt sich sicherstellen, dass das Fahrzeug immer mit angezogener Handbremse 9 und daher abgesichert abgestellt wird.
Zusätzlich könnten entsprechende Anzeigen oder Warnsummer für eine bessere Wahrnehmung der Signale für den Fahrer sorgen.
Weiterhin vorteilhaft ausgeführt ist die Erfindung dann, wenn bei einem automatischen Getriebe das Fahrzeug mit einer der dem gewählten Anzugsmoment der Bremse 9 entsprechenden Moment versucht, gegen diese Bremse 9 kurz zu beschleunigen, was zu einer Kontrolle führt, ob sich das Fahrzeug gegen die Bremse 9 bewegen lässt. Damit wird die Funktionsfähigkeit der Bremse 9 selbst getestet. Ebenso lässt sich die Bremse 9 auch automatisch aktivieren, um zum Beispiel den Zug zu strecken oder um die Motorstaubremse bei Schubbetrieb automatisch zu aktivieren.
Nach einer besonders vorteilhaften Ausführungsform der Erfindung lässt sich die Betätigungsvorrichtung auch für das Einlegung eines Ganges verwenden. Allerdings muss beachtet werden, dass die Zahnelemente des Getriebes eventuell Zahn auf Zahn stehen und der Gang somit nicht eingelegt werden kann. Auch diese Information ist aus der Positionsrückmeldung des Motors erhältlich.
Besonders vorteilhaft muss erwähnt werden, dass durch eine leichte Rückstellung des Aktuators 3 nach dem Einlegevorgang des Ganges die auf das Getriebe wirkende Stellkraft zurückgenommen wird, was durch die schonende Arbeitsweise zu einer Verlängerung der Lebensdauer des Getriebes führt. Als weiterhin vorteilhaft zu erwähnen ist, dass sich mit der erfindungsgemäßen Lösung das Stellglied 9 im Stellbereich des Motors in jede beliebige Position stufenlos verfahren lässt.
Gleichfalls ist einem Linearspindelmotor 3 immanent, dass die angesteuerte Position des Motors auch durch Zug- oder Druckkräfte am beweglichen Teil nicht veränderbar ist, was einer automatischen Verriegelung entspricht. Hauptvorteil der Erfindung ist, dass anstelle der üblichen Seilzüge, Bowdenzüge bzw. Hydraulikkomponenten und -leitungen am Fahrzeug durch die Betätigungsvorrichtung mit elektrischem Aktuator 3 nur dünne und elastische, elektrische Leitungen zur Signalübertragung verwendet werden müssen und somit Bewegungen von mechanischen Teilen durch aktive oder passive Kabinenfederungen keine Auswirkung und Probleme für den Signaltransport und somit die Funktionssicherheit des Systems haben. Ebenso vorteilhaft ist, dass durch die elektrische Ansteuerung durch den Joystick 1 großbauende Hebel durch die Elektronik des Bedienelements 1 ersetzt werden können. Gleichfalls vorteilhaft ist, dass das System ohne weiteres Zutun des Bedieners durch eine entsprechende Programmierung von sich aus in den sicheren Modus geschaltet wird. Auch ist über das Bussystem des Fahrzeuges die Einbindung der Bedienfunktionen in andere automatisch ablaufende Vorgänge möglich. So wird die automatische Betätigung verschiedener Komponenten ohne Einwirkung des Fahrers möglich, wenn im Steuer- und Regelsystem des Fahrzeugs bestimmte Bedingungen zur automatischen Auslösung erfüllt sind.

### LISTE DER BEZUGSZEICHEN

- 1.: Bedienelement Steuerknüppel/Joystick
- 2.: Steuereinheit/Controller
- 3.: Aktuator/Linearspindelmotor
- 4.: Steller/Spindel
- 5.: Mittel zur Positionsbestimmung
- 6.: Bedienelement Signal
- 7.: Signal zur Positionsbestimmung
- 8.: Ausgangssignal Steuereinheit
- 9.: Stellglied/Bremse
- 10.: Flügelrad
- 11.: beweglicher Schlitten
- 12.: Kurbel
- 13.: Rahmen
- 14.: Gewindeinnenbohrung

## Patentansprüche

1. Betätigungsvorrichtung mit Aktuator, umfassend ein Bedienelement (1), eine Steuereinheit (2), ein Aktuator (3), ein mit dem Aktuator (3) und einem manuell bedienbaren Element gekoppelter Steller (4) sowie Mittel (7) zur Positionsbestimmung des Stellers (4), welche derart zusammenwirken, dass ein elektrisches Signal des Bedienelements (1) in der Steuereinheit (2) mit mindestens einem Signal zur Positionsbestimmung (5) des Stellers (4) zu einem elektrischen Ausgangssignal (8) verarbeitet wird und dass der Aktuator (3) in Abhängigkeit des Ausgangssignals (8) eine translatorische Stellbewegung ausführen, **dadurch gekennzeichnet, dass** der Aktuator (3) als Linearspindelmotor (3) ausgebildet ist, wobei der Linearspindelmotor (3) und der Steller (4) gemeinsam auf einem beweglichen Schlitten (11) angeordnet und mit dem Stellglied (9) verbunden sind und dass der bewegliche Schlitten (11) von einem Rahmen (13) translatorisch geführt wird, wobei über eine Kurbel (12) für den Handbetrieb mit zugehöriger Bewegungsumformung der bewegliche Schlitten (11) translatorisch bewegt werden kann und somit der Linearspindelmotor (3) und der Steller (4) gemeinsam, also ohne Relativbewegung zueinander, bewegt werden können und die Stellbewegung ausführen können.

2. Betätigungsvorrichtung mit Aktuator nach Anspruch 1, **dadurch gekennzeichnet, dass** als Mittel zur Positionsbestimmung (5) des Stellers (4) ein Schieberpotentiometer oder codierte digitale Positionsaufnehmer vorgesehen ist, mit welchem eine Positionsrückmeldung des Stellers (4) an die Steuereinheit (2) erfolgt.

3. Betätigungsvorrichtung mit Aktuator nach einem der Ansprüche 1 bis 2, **dadurch gekennzeichnet, dass** eine Brückenschaltung vorgesehen ist, mit welcher die Bewegungsrichtung des Stellers (4) durch Ansteuerung der Brückenschaltung durch Pulsung oder Analogspannungsveränderung steuerbar ist.

4. Betätigungsvorrichtung mit Aktuator nach einem der Ansprüche 1 bis 3, **dadurch gekennzeichnet, dass** die Brückenschaltung derart ausgebildet ist, dass die Stellgeschwindigkeit des Stellers (4) durch die Pulsung der Brückenschaltung steuerbar ist.

5. Betätigungsvorrichtung mit Aktuator nach einem der Ansprüche 1 bis 4, **dadurch gekennzeichnet, dass** die Steuereinheit (2) als Mikrocomputer ausgeführt ist, der die Signale der Systemdiagnose über die Stromaufnahme, Kurzschluss und von Signalunterbrechungen verarbeitet und bei der Ausgabe des Ausgangssignals der Steuereinheit (2) an den Aktuator (3) berücksichtigt.

6. Betätigungsvorrichtung mit Aktuator nach einem der Ansprüche 1 bis 5, **dadurch gekennzeichnet, dass** als Bedienelement (1) ein Steuerknüppel in der Art eines Joystick (1) oder ein Schalter vorgesehen ist.

7. Betätigungsvorrichtung mit Aktuator nach Anspruch 6, **dadurch gekennzeichnet, dass** die Stellbewegung des Aktuators (3) bzw. des Stellers (4) proportional zur Auslenkung des Bedienelements (1) ist.

8. Verwendung einer Betätigungsvorrichtung mit Aktuator nach einem der Ansprüche 1 bis 7, **dadurch gekennzeichnet, dass** diese zur Betätigung der Bremse, der Handbremse, der Parksperre, der Motorstaubremse, der Kupplung, des Ganghebels oder der PTO (Zapfwellen) -Gänge vorgesehen sind.

## Claims

1. Actuating device with actuator, comprising a control stick 1, a control unit (2), an actuator (3) and a final control element (4) coupled with a manually operable element and a means (7) for determining the position of the final control element (4), which work together in such a manner that an electrical signal from the control stick (1) in the control unit (2) with at least one signal for determining the position (5) of the final control element (4) is processed into an electrical output signal (8) and that the actuator (3) executes a translatory regulating motion dependent upon the output signal (8), **characterised in that** the actuator (3) is designed as a linear spindle motor (3), where the linear spindle motor (3) and the final control element (4) are arranged together on a movable sled (11) and are connected with the servo component (9) and that the movable sled (11) is guided translatorially by a frame (13), where via a crank (12) for manual operation with associated conversion of the motion of the movable sled (11) can be moved translatorially and hence the linear spindle motor (3) and the final control element (4) can be moved together, thus without motion relative to each other, and can perform the regulating motion.

2. Actuating device with actuator in accordance with claim 1, **characterised in that** as the means for determining the position (5) of the final control element (4) a slider potentiometer or coded digital position recorder is envisaged, with which a position report of the final control element (4) to the control unit 2) is effected.

3. Actuating device with actuator in accordance with one of the claims 1 to 2, **characterised in that** a bridge circuit is envisaged, with which the direction of movement of the final control element (4) is controllable through triggering of the bridge circuit by pulsing or variation of an analogue voltage.

4. Actuating device with actuator in accordance with claims 1 to 3, **characterised in that** the bridge circuit is designed in such a way that the speed of adjustment of the final control element (4) is controllable through the pulsing of the bridge circuit.

5. Actuating device with actuator in accordance with claims 1 to 4, **characterised in that** the control unit (2) is implemented as a microcomputer, which processes the signals from the system diagnosis system for current consumption, short-circuit and signal interruptions and takes account of them when emitting the output signals from the control unit (2) to the actuator (3).

6. Actuating device with actuator in accordance with claims 1 to 5, **characterised in that** as the operational control (1) a control stick in the nature of a joystick (1) or a switch is envisaged.

7. Actuating device with actuator in accordance with claims 1 to 6, **characterised in that** the adjusting motion of the actuator (3) or of the final control element (4) is proportional to the deflection of the operational control (1).

8. The employment of an actuating device with actuator in accordance with one of the claims 1 to 7, **characterised in that** these are envisaged for actuation of the brake, the hand brake, the parking brake, the engine stalling brake, the gear lever or the PTO-gears.

## Revendications

1. Dispositif de commande avec actionneur, comprenant un élément de commande (1), une unité de commande (2), un actionneur (3), un organe final (4) couplé avec l'actionneur (3) et un élément à commande manuelle, ainsi que des moyens (7) pour l'intégration de position de l'organe final (4), qui collaborent de manière à ce qu'un signal électrique de l'élément de commande (1) dans l'unité de commande (2) soit traité avec au moins un signal intégrateur de position (5) de l'organe final (4) en un signal de sortie électrique (8) et que l'actionneur (3) exécute un mouvement de réglage à translation en fonction du signal de sortie (8), **caractérisé en ce que** l'actionneur (3) a la forme d'un moteur à broche linéaire (3), le moteur à broche linéaire (3) et l'organe final (4) étant montés ensemble sur un chariot mobile (11) et reliés avec l'organe final (9) et **en ce que** le chariot mobile (11) soit guidé à translation par un châssis (13), le chariot mobile (11) pouvant être déplacé à translation via une manivelle (12) pour le mode manuel avec inversion de mouvement correspondante et qu'ainsi le moteur à broche linéaire (3) et l'organe final (4) puissent être déplacés ensemble, c'est-à-dire sans mouvement relatif l'un par rapport à l'autre et puissent exécuter le mouvement de réglage.

2. Dispositif d'actionnement avec actionneur selon la revendication 1, **caractérisé en ce que**, comme moyen intégrateur de position (5) de l'organe final (4), un potentiomètre à curseur ou des capteurs de position numériques codés soient prévus, grâce auxquels un message en retour de la position de l'organe final (4) à l'unité de commande (2) est réalisé.

3. Dispositif d'actionnement avec actionneur selon l'une des revendications 1 à 2, **caractérisé en ce que** un montage en pont est prévu grâce auquel le sens du mouvement de l'organe final (4) puisse être commandé par la commande du montage en pont par une pulsion ou par une modification de la tension analogique.

4. Dispositif d'actionnement avec actionneur selon l'une des revendications 1 à 3, **caractérisé en ce que** le montage en pont est formé de manière telle que la vitesse de réglage de l'organe final (4) puisse être commandée par la pulsion du montage en pont.

5. Dispositif d'actionnement avec actionneur selon l'une des revendications 1 à 4, **caractérisé en ce que** l'unité de commande (2) est exécutée comme micrordinateur qui transforme les signaux du système de diagnostic via la consommation de courant, le court-circuit et des interruptions de signal et en tient compte pour l'émission du signal de sortie de l'unité de commande (2) vers l'actionneur (3).

6. Dispositif d'actionnement avec actionneur selon l'une des revendications 1 à 5, **caractérisé en ce que** comme élément de commande (1) un manche à balai à l'instar d'un joystick (1) ou un commutateur est prévu.

7. Dispositif d'actionnement avec actionneur selon la revendication 6 **caractérisé en ce que** le mouvement de réglage de l'actionneur (3) ou de l'organe final (4) est proportionnel à l'inclinaison de l'élément de commande (1)

8. Utilisation d'un dispositif d'actionnement avec actionneur selon l'une des revendications 1 à 7, **caractérisée en ce que** celle-ci est prévue pour l'actionnement du frein, du frein à main, du frein de stationnement, du frein d'arrêt du moteur, de l'embrayage, du levier de vitesses ou des vitesses de la PDF (prise de force).
